# FASCICULE DE BREVET EUROPEEN

(11) **EP 4 344 527 B1**
(45) Date de publication et mention de la délivrance du brevet: **09.09.2026**
(21) Numéro de dépôt: 24158192.5
(22) Date de dépôt: 08.04.2020
(51) Int. Cl.: A01G 22/30, A01D 45/00, A01D 34/83

(54) **MÉTHODES ET APPAREILS POUR LE PRÉLÈVEMENT DE L'ACROTELME DE TOURBIÈRES**
VERFAHREN UND VORRICHTUNGEN ZUR ENTNAHME VON TURNIERS
METHODS AND APPARATUS FOR COLLECTING ACROTELM FROM BOGS

(30) Priorité: 09.04.2019 CA 3039879
(43) Date de publication de la demande: 03.04.2024
(62) Numéro(s) de document de la (des) demande(s) initiale(s) en application de l'article 76 CBE: 20788124.4 / 3 952 633
(73) Titulaire: Premier Horticulture Ltée, Rivière-du-Loup, Québec G5R 6C1 (CA)
(72) Inventeur: BÉLANGER, Bernard, La Pocatière (CA); GAGNON, Guy, Rivière-du-Loup (CA); HOULE, Éric, Rimouski (CA); CARON, Frédéric, Rivière-du-Loup (CA); LAVOIE, Valérie, Ste-Hélène-de-Kamourraska (CA); RICHARD, Jean-Luc, St-Louis du Ha! Ha! (CA); PELLETIER, Francis, Témiscouata-sur-le-Lac (CA); CYR, Alexandre, Dégelis (CA); ROBERT, Stéphane, Témiscouata-sur-le-Lac (CA)
(74) Mandataire: Valet Patent Services Limited

(56) Documents cités:
- EP-A2- 2 460 398
- DE-A1- 19 906 944
- RU-C1- 2 629 612
- US-A- 4 656 819

## Description

### RÉFÉRENCE AUX DEMANDES DE BREVETS RELIÉES

La présente demande revendique la priorité de la demande canadienne no 3,039,879 déposée le 9 avril 2019.

### DOMAINE DE LA DIVULGATION

Le domaine de la présente invention porte sur des méthodes et appareils destinés à la récolte de mousse de sphaigne. Par exemple, de telles méthodes et appareils peuvent être utilisés de sorte à effectuer une récolte d'une manière renouvelable et avec un impact minimal sur l'environnement.

### ÉTAT DE LA TECHNIQUE

Les tourbières sont des milieux humides d'une grande valeur écologique et économique. Maints usages y sont associés, dont certaines commerciales. À ce titre, y figure l'extraction de la tourbe pour des usages ex *situ* ; que ce soit à des fins énergétiques, d'absorption, de filtration ou, plus largement, comme substrat de culture. Pour des usages horticoles, bien que dépourvu de nutriments, la capacité hydrique, la rigidité de sa structure et la porosité de la tourbe en font une matière première recherchée. En contrepartie, son exploitation conduit à l'épuisement de la ressource et à la dégradation des tourbières au fil du temps.

Les tourbières se forment là où le taux d'accumulation de la matière organique est supérieur à la vitesse à laquelle elle se décompose. De là l'importance de prélever que ce qui est nécessaire afin de garantir la préservation de la ressource et l'équilibre de l'écosystème.

Bien que les techniques de collecte et de réhabilitation ont évoluées au cours des dernières années, aucune ne permet la cueillette de la biomasse, sans interférer avec la pérennité du milieu.

Actuellement, les techniques usuelles de préparation comprennent le drainage, étape nécessaire aux activités d'exploitation, qui inclus la coupe de la végétation et le rabattage de la nappe phréatique à l'aide de fossés. Après assèchement, et que la parcelle est suffisamment ferme pour supporter la machinerie, suivent les travaux de nettoyage et d'aplanissement des lieux.

Pour l'extraction de la tourbe, une fois l'aire de cueillette bien préparée, la méthode la plus usuelle consiste à décompacter les premiers centimètres de sol à l'aide d'une herse, ceci pour en exposer les premiers centimètres. Cette opération aide au séchage de la tourbe, sous l'effet combiné du vent et du soleil, et facilite la cueillette à l'aide d'un aspirateur tracté, qui retire cette fine couche. Les meules ainsi formées sont ensuite transportées à l'usine où elles seront débarrassées des matières indésirables (branches, racines ou autres). Une fois fait, la tourbe est emballée, seule ou en mélange, puis expédiée sur les marchés.

Bien qu'usuelles et fortement répandues, ces pratiques industrielles d'exploitation épuisent progressivement la ressource, et, à terme, deviennent fortement invasives et perturbatrices du milieu; ceci ne serait-ce que par l'impact des véhicules lourds qui y circulent et la compaction du sol qui en résulte.

Cette situation a amené un nombre croissant de pays à édicter des normes strictes pour encadrer cette industrie et en minimiser les aspects négatifs.

Du choix du mode de prélèvement dépendent la pérennité de la ressource et le maintien de cet écosystème.

Les tourbières exploitées ne retournent pas aisément à leur état initial sans qu'une intervention humaine soit apportée au niveau remouillage (hydrologie) et réintroduction du couvert végétal, principalement les sphaignes.

Comme la tourbe s'accumule à un rythme moyen de 0,5 à 1 mm par an (principalement sous la latitude de l'est du Québec, Canada), bien que restaurée, il est illusoire de penser qu'une tourbière après exploitation puisse de nouveau permettre une seconde extraction commerciale dans un avenir dit rapproché d'environ plusieurs centaines ou milliers d'années.

Des approches visant à minimiser l'empreinte négative sur le milieu existent. Par exemple, dans les tourbières de la province de Magallanes, au Chili, la récolte de sphaigne de surface ou de mousse de sphaigne (et non pas de tourbe) se veut manuelle, réalisée à la fourche et appliquée à une profondeur n'excédant pas les 25 cm. L'extraction s'y fait par section et de 20 % à 30 % de la matière initialement présente est laissée sur place afin de favoriser la régénération du milieu.

Aussi pour une exploitation commerciale, un équipement de récolte mécanisée, développée par la société finlandaise Novarbo Biolan/BRT Solutions Ltd, permet l'accès à des tourbières peu profondes et rend possible l'extraction de la sphaigne de surface qui s'y trouve. Bien que la méthode évite le drainage de l'aire de cueillette, elle demeure invasive ne serait-ce que par la pression exercée sur le sol par les chenilles et la manière dont la sphaigne y est retirée (i.e. littéralement arrachée) du milieu, laissant un sol ravagé et nu.

De fait, l'une et l'autre des solutions décrites ci-dessus présentent des lacunes notables : pour la chilienne, bien que pérenne, la rentabilité commerciale y est absente; pour la finlandaise, bien qu'économiquement viable, l'intégrité initiale du milieu s'y trouve compromise et la régénérescence de la ressource, pour un prélèvement ultérieur durable et répété à court ou moyen terme (par exemple 15 à 20 ans) y fait défaut.

De là le besoin d'un appareil et/ou d'une méthode permettant d'éviter au moins un des désavantages des technologies de l'art antérieur.

### SOMMAIRE DE LA DIVULGATION

Selon un aspect, la présente divulgation concerne une méthode de prélèvement de mousse de sphaigne comprenant une coupe motorisée et un prélèvement d'au moins une portion de la mousse de sphaigne dans laquelle la coupe est effectuée au moins dans un sens substantiellement parallèle par rapport au sol.

Selon un autre aspect, la présente divulgation concerne une méthode de prélèvement de mousse de sphaigne selon la revendication 1.

Les méthodes préalablement discutées confèrent plusieurs avantages comparativement aux solution technologiques proposées dans l'art antérieur. Certains de ces avantages sont énumérés ci-dessous.
**1- Maintien des communautés microbiennes, fauniques et végétales présentes à la surface de tourbières à sphaignes**
   - Pour le prélèvement de mousse de sphaigne, la méthode et l'appareil faisant l'objet de la présente divulgation permettent le maintien de la diversité floristique et la conservation des communautés végétales qui s'y développent, puisque l'approche favorise le retour rapide du couvert végétal ainsi que celui de l'ensemble de la végétation caractéristique d'une tourbière dite naturelle. Cette prémisse s'appuie sur des observations du milieu et sur l'hypothèse réaliste voulant qu'ici une seule portion de l'acrotelme est prélevée, sans affecter la vitalité de la sphaigne qui demeurent ancrée au sol. De surcroît, il est envisagé de dynamiser davantage la repousse en remettant au sol la partie apicale de la sphaigne recueillie, de manière à accroître la reprise rapide de la végétation et de conserver l'ensemble de la banque de diaspores propres au site.
   - Simultanément, l'approche proposée dans la présente divulgation accélère le retour de la faune propre aux tourbières dites naturelles et préserve sa diversité faunique. Elle y parvient en préservant l'aire de surface suite à la récolte de la sphaigne et en maintenant intact l'hydrologie du sous-sol. Leur habitat préservé, les espèces animales continuent de trouver en ces lieux les éléments nécessaires à leur suivie en matière d'abri, d'alimentation et de reproduction.
   - Les connaissances actuelles permettent difficilement de comparer entre eux les différents microbiotes présents dans les écosystèmes complexes que sont les tourbières. Néanmoins, il est plausible de penser qu'avec une approche respectueuse comme celle décrite dans la présente divulgation, qui préserve davantage l'intégrité et la pérennité de l'aire de cueillette sous ses aspects faunique, botanique et hydrologique, la flore microbienne indigène déjà présente soit de facto préservée.
   - Une année après la cueillette selon les méthodes de la présente divulgation et en utilisant les unités et systèmes qui y sont présentés, les sites de récolte présentent un taux de reprise de la végétation avoisinant 100% et aucune modification notable de la population floristique n'a été observée. Il est clair que ces premières données doivent être corroborées et que des mesures de caractérisation plus complètes, touchant la biodiversité du milieu, soient entreprises au cours des prochaines années.
**2- Conservation du rôle des tourbières comme puits de carbone.**
   - Suite à la récolte de sphaigne via les méthodes et appareils proposés, un niveau de captation de carbone (C) équivalant ou supérieur à ce qui est enregistré en milieu naturel est pressenti; ceci du moins pour la très grande majorité des tourbières existantes. Même dans les cas de milieux humides exceptionnellement émetteurs, ayant un patron inhabituel de flux d'échanges de carbone, tel que sont les tourbières de la région de Rivièredu-Loup, une diminution de carbone libéré a été observée seulement une année après avoir procédé à la cueillette de la sphaigne. Le taux moyen dioxyde de carbone (CO₂) libéré y est passé de 20 g CO₂ m⁻² jour⁻¹, pour les aires vierges, non exploitées, à 9 g CO₂ m⁻² jour⁻¹ pour les secteurs récoltés. Il est donc justifié de croire que, pour les tourbières ayant un patron habituel de flux d'échanges de carbone, la séquestration du CO₂ risque d'être supérieure à ce qui est rencontrée dans une aire dite vierge.
   - Les méthodes et appareils de la présente divulgation permettent de plus la préservation du carbone accumulé au fil des ans, emprisonné dans la matière organique qu'est la tourbe, en quantité massive, principalement dans le catotelme. Le carbone séquestré dans le catotelme y demeure : la cueillette s'effectuant ici que dans l'acrotelme des tourbières, sans besoin de drainer les eaux ou d'abaisser la nappe phréatique, le tout en conservant le couvert végétal vivant.
   - Pour confirmer ces présomptions, au fil des années à venir, de la période de récolte initiale jusqu'au renouvellement complet de la sphaigne prête à une seconde cueillette, des suivis échelonnés dans le temps et sur différents types de tourbières seront entrepris, avec emphase sur l'analyse des flux de carbone (CO₂ et CH₄) présents dans les tourbières.
**3- Méthodes et appareils destinés à la récolte de sphaigne, de manière renouvelable et avec un impact minimal sur l'environnement.**
   - Il est porté de croire que la technologie de la présente divulgation permettra le renouvellement de la matière première qu'est la sphaigne et une utilisation pérenne de l'aire de cueillette au fil du temps. Il est estimé que le renouvellement intégral de la matière surviendra dans un horizon de 5 à 10 ans. Une année après récolte, les sites montrent déjà un taux de rétablissement évident. Le temps réel nécessaire au renouvellement du milieu sera confirmé au cours des prochaines années.
   - Comme aucune intervention n'est effectuée pour modifier le niveau de la nappe phréatique, cette pratique minimise grandement les impacts sur l'hydrologie. Elle permet aussi d'éviter le rejet de sédiments dans les eaux environnantes via des canaux de drainage : procédure courante dans l'exploitation des tourbières conventionnelles. Tout ceci est sans compter la préservation des fonctions hydro-écologiques de l'aire de récolte. De par la cueillette, la tourbière est maintenue dans un état de développement constant. Les phénomènes liés à la sénescence des organismes et du milieu s'en trouvent ralentis ou grandement retardés. Ces conditions accroissent la captation de carbone, facilite la gestion hydrique lors de fortes précipitations et évitent les débordements du bassin versant.

### BRÈVE DESCRIPTION DES FIGURES

Les figures de la présente divulgation illustrent d'une façon non-limitative divers exemples.
La figure 1 montre un schéma de coupe d'une méthode selon un exemple de la présente divulgation.
La figure 2 est une vue en perspective d'une unité de coupe selon un exemple de la présente divulgation.
La figure 3 est une vue de côté de l'unité de coupe de la figure 2;
La figure 4 est une vue en perspective d'un système de récolte selon un exemple de la présente divulgation comprenant un mode tracté sur chenilles.
La figure 5 est une vue en perspective d'un système de récolte selon un autre exemple de la présente divulgation comprenant un mode tracté sur patins.
La figure 6 est une vue en perspective d'un système de récolte selon un autre exemple de la présente divulgation comprenant un mode sur rails.
La figure 7 est une vue en perspective d'un système de récolte selon un autre exemple de la présente divulgation comprenant un mode sur rails.
La figure 8 est une vue en perspective d'un système de récolte selon un autre exemple de la présente divulgation comprenant un mode sur rails.
La figure 9 est une vue en perspective d'un système de récolte selon un autre exemple de la présente divulgation comprenant un mode sur rails.
La figure 10 est une vue en perspective d'un système de récolte selon un autre exemple de la présente divulgation comprenant un mode propulsé sur chenilles.
La figure 11 est une de côté vue en perspective d'une unité de coupe selon un autre exemple de la présente divulgation.

### DESCRIPTION DÉTAILLÉE DE LA PRÉSENTE DIVULGATION

Les exemples présentés dans cette divulgation sont présentés d'une façon non-limitative.

L'expression « tout en laissant la mousse de sphaigne ancrée au sol », telle qu'utilisée dans la présente divulgation signifie qu'une partie de mousse de sphaigne est prélevée par le biais d'une coupe tout en laissant la mousse de sphaigne ancrée au sol et ce sur au moins 90 % de la surface récoltée, au moins 95 % de la surface récoltée ou même 99 % de la surface récoltée. L'homme de l'art comprendra qu'en raison des irrégularités du terrain (et de ses composantes), où la mousse de sphaigne est récoltée (tourbière) il est possible que l'équipement utilisé accroche ou contacte d'une manière accidentelle la mousse de sphaigne au sol et qu'une partie soit endommagée et arrachée. L'homme de l'art comprendra que dans une situation théorique de terrain parfaitement plat et dépourvu de composantes modifiant ce caractère parfaitement plat, une telle coupe et récolte serait effectuée sans toutefois arracher la mousse de sphaigne i.e. seule une coupe et un prélèvement de la portion intermédiaire de la mousse serait effectués. Par exemple, le prélèvement d'une portion intermédiaire située par exemple entre le sol et la partie apicale peut être fait. Selon un autre exemple, le prélèvement d'une portion située au-dessus du sol et comprenant la partie apicale peut être envisagé.

Par exemple, la coupe peut être effectuée au moins dans un sens substantiellement horizontal aux extrémités supérieure et inférieure d'une portion intermédiaire tout en laissant la mousse de sphaigne ancrée au sol et en redéposant une partie apicale au sol.

Par exemple, la coupe peut être effectuée avec au moins une lame ou une scie.

Par exemple, la coupe peut être effectuée avec au moins une scie à chaîne.

Par exemple, la coupe peut être effectuée avec au moins deux scie à chaîne.

Par exemple, la coupe peut être en outre effectuée dans un sens substantiellement vertical.

Par exemple, la coupe peut être en outre effectuée dans un sens substantiellement horizontal aux extrémités supérieure et inférieure de la portion intermédiaire par le biais d'une scie à chaîne et une coupe est également effectuée dans un sens substantiellement vertical par le biais d'une lame ou d'une scie.

Par exemple, la coupe et/ou le prélèvement peuvent être effectués d'une façon motorisée tout en exerçant une pression au sol d'environ 2.5 à environ 35 kPa, d'environ 3 à environ 15 kPa, d'environ 3 à environ 10 kPa, d'environ 3 à environ 7 kPa, d'environ 3 à environ 5 kPa, ou d'environ 4 à environ 5 kPa.

Par exemple, la coupe peut permettre un prélèvement de l'acrotelme de tourbières ombrotrophes, minérotrophes ou mixtes.

Par exemple, la coupe peut être permettre un prélèvement de l'acrotelme dans une tourbière ombrogène, soligène, topogène, limnogène ou telmatogène.

Par exemple, la coupe peut être permettre un prélèvement de l'acrotelme dans une tourbière tourbière alcaline (dite à carex) ou acide (dite à sphaignes).

La coupe est effectuée par sciage horizontal à un angle de coupe d'environ 0 à environ 10° par rapport au sol ou d'environ 0 à environ 5° par rapport au sol.

Par exemple, la coupe effectuée à l'extrémité supérieure de la portion intermédiaire peut être effectuée à un angle de coupe d'environ 0 à environ 10° par rapport au sol et la coupe effectuée à l'extrémité inférieure de la portion intermédiaire peut être effectuée à un angle de coupe d'environ 0 à environ 10° par rapport au sol.

Par exemple, la coupe effectuée à l'extrémité supérieure de la portion intermédiaire peut être effectuée à un angle de coupe d'environ 0 à environ 5° par rapport au sol et la coupe effectuée à l'extrémité inférieure de la portion intermédiaire peut être effectuée à un angle de coupe d'environ 1 à environ 5° par rapport au sol.

Par exemple, la coupe peut être effectuée de façon à prélever une portion mesurant d'environ 2 cm à environ 40 cm, environ 3 cm à environ 30 cm, environ 5 cm à environ 20 cm, ou environ 8 cm à environ 12 cm.

Par exemple, la coupe peut être effectuée en ayant une distance prédéterminée entre les extrémités supérieure et inférieure d'une portion intermédiaire de façon à prélever une portion intermédiaire mesurant environ 2 cm à environ 40 cm, environ 3 cm à environ 30 cm, environ 4 cm à environ 25 cm, environ 5 cm à environ 25 cm, environ 5 cm à environ 20 cm, environ 7 cm à environ 17 cm, environ 7 cm à environ 15 cm ou environ 8 cm à environ 12 cm.

Par exemple, la coupe peut être effectuée en ayant une unité de vitesse de la scie d'au moins 50 mètres par minute, environ 50 à 400 mètres par minute, environ 60 à environ 300 mètres par minute, environ 75 à environ 250 mètres par minute, environ 100 à environ 250 mètres par minute, environ 150 à environ 250 mètres par minute, ou environ 180 à environ 220 mètres par minute.

Par exemple, un pignon peut être soumis à une rotation, ledit pignon peut avoir rayon d'environ 1 à environ 15 cm, d'environ 2 à environ 13 cm ou d'environ 4 à environ 12 cm.

Par exemple, la coupe peut être effectuée par une scie.

Par exemple, la coupe peut être effectuée par une scie à chaîne.

La coupe effectuée comprend une coupe verticale, de préférence effectuée avec un angle de plus ou moins 45 ° par rapport à un axe vertical, de plus ou moins 20 ° par rapport à un axe vertical, de plus ou moins 10 ° par rapport à un axe vertical, ou de plus ou moins 0° par rapport à un axe vertical.

Par exemple, la coupe verticale peut être effectuée à deux endroits avec indépendamment un angle de plus ou moins 45 ° par rapport à un axe vertical à chacun des endroits, indépendamment un angle de plus ou moins 20 ° par rapport à un axe vertical à chacun des endroits, indépendamment un angle de plus ou moins 10 ° par rapport à un axe vertical à chacun des endroits, ou indépendamment un angle de plus ou moins 0° par rapport à un axe vertical à chacun des endroits.

Par exemple, la coupe verticale peut être effectuée avec une distance d'environ 40 à environ 400 cm entre les deux endroits, d'environ 50 à environ 150 cm entre les deux endroits, d'environ 60 à environ 120 cm entre les deux endroits, ou d'environ 80 à environ 100 cm entre les deux endroits.

Par exemple, le prélèvement peut être effectué par le biais d'un convoyeur.

Par exemple, la méthode peut comprendre en outre l'essorage et l'égouttage de la portion intermédiaire prélevée.

Par exemple, une pression d'environ 25 à environ 750 kPa, d'environ 30 à environ 700 kPa, d'environ 40 à environ 600 kPa, peut être exercée sur la mousse de sphaigne.

Par exemple, une unité d'essorage et/ou d'égouttage peut faire partie intégrante ou, séparée ou peut être rattachée à un équipement permettant la coupe ou le prélèvement de la mousse de sphaigne.

Par exemple, la méthode peut être effectuée par le biais du déplacement motorisé d'une unité de coupe permettant d'effectuer simultanément la coupe horizontale aux extrémités supérieure et inférieure de la portion intermédiaire de la mousse de sphaigne, et une coupe verticale à deux endroits séparés par une distance prédéterminée.

Par exemple, le déplacement de l'unité de coupe peut être effectué sur un pont mobile.

Par exemple, le pont mobile peut supporter une unité de coupe, reposant à des extrémités sur deux rails mobiles parallèles, lesdites rails étant munies ou non d'une unité de transport pour l'acheminement de la matière récoltée.

Par exemple, le déplacement de l'unité de coupe peut être effectué par un équipement tracté ou autopropulsé.

Par exemple, le déplacement de l'unité de coupe peut être effectué par le biais d'une rampe modulaire.

Par exemple, la rampe modulaire peut comprendre une base qui permet une répartition du poids sur la mousse de sphaigne.

Par exemple, la mousse de sphaigne récoltée peut subir un foisonnement.

Par exemple, la mousse de sphaigne récoltée peut temporairement être entreposée directement sur un site de cueillette.

Par exemple, la mousse de sphaigne récoltée peut être temporairement entreposée directement sur un site de cueillette avec protection contre les intempéries.

Par exemple, la méthode peut en outre comprendre, un séchage, un foisonnement, une coupe, un tamisage, un mélange, un ensachage et/ou un entreposage.

Par exemple, la méthode peut comprendre une vitesse moyenne de cueillette est d'environ 0.1 à environ 1.5 km/heure, d'environ 0.2 à environ 1.2 km/heure, d'environ 0.3 à environ 1.1 km/heure ou d'environ 0.5 à environ 1.0 km/heure.

Par exemple, la méthode peut comprendre un volume de cueillette d'environ 250 à environ 1500 m³/hectare, d'environ 300 à environ 1300 m³/hectare, d'environ 400 à environ 1200 m³/hectare ou d'environ 500 à environ 1100 m³/hectare.

Par exemple, la mousse de sphaigne peut être prélevée sous forme de bandes alternées.

Par exemple, la mousse de sphaigne peut être prélevée sous forme continue.

Par exemple, la méthode peut être effectuée dans une tourbière minérotrophe, ombrotrophe ou mixte.

Par exemple, la coupe peut être effectuée à l'aide d'une scie, d'un ciseau, d'un couperet, d'un laser, d'un couteau ou d'une lame.

Par exemple, la coupe peut être effectuée en ayant une vitesse de rotation d'environ 200 à environ 2000 rpm, d'environ 400 à environ 1800 rpm, d'environ 600 à environ 1600 rpm ou d'environ 700 à environ 1500 rpm. Par exemple, un pignon peut être soumis à ladite rotation, ledit pignon peut avoir rayon d'environ 1 à environ 15 cm, d'environ 2 à environ 13 cm ou d'environ 4 à environ 12 cm

Par exemple, ladite pression peut être exercée durant une période d'environ 1 à environ 60 secondes, d'environ 2 à environ 45 secondes, ou d'environ 5 à environ 30 secondes.

Par exemple, dans l'unité de coupe, la première orientation peut être horizontale.

Par exemple, dans l'unité de coupe, la deuxième orientation peut être verticale.

Par exemple, dans l'unité de coupe, la première paire de lames peut être une paire de scies à chaîne.

Par exemple, les scies à chaîne peuvent être disposées de façon à ce que la première paire de lames comprend une première scie à chaîne disposée au-dessus d'une deuxième scie à chaîne, la première scie à chaîne peut être disposée à l'horizontale et peut être avancée par rapport à la deuxième scie à chaîne de sorte que lorsque l'unité de coupe contacte un élément à couper, ledit élément contacte en premier la première scie à chaîne et ledit élément contacte ensuite la deuxième scie à chaîne.

Par exemple, la deuxième paire de lames peut être une paire de scies à chaîne.

Par exemple, la deuxième paire de lames peut être une paire de lames circulaires.

Par exemple, la deuxième paire de lames peut être une paire de lames de cisaille.

Par exemple, le système de récolte peut comprendre en outre un système de rails permettant de supporter ladite unité de coupe.

Par exemple, le système de récolte peut comprendre en outre un convoyeur permettant d'acheminer la mousse de sphaigne.

Par exemple, le système de récolte peut comprendre en outre au moins un rouleau permettant l'essorage.

Par exemple, le système de récolte peut comprendre en outre des rouleaux permettant l'essorage.

Par exemple, le système de récolte peut comprendre en outre des cylindres permettant un pré-essorage.

Par exemple, la méthode peut être effectuée par le biais d'une unité de coupe telle que décrite dans la présente divulgation.

### Principe de récolte

Par exemple, la divulgation concerne une méthode destinée au prélèvement de mousse de sphaigne vivante, comprenant une coupe motorisée et un prélèvement d'au moins une portion de la tourbe dans laquelle la coupe est effectuée au moins dans un sens substantiellement parallèle par rapport au sol, ce tout en laissant la mousse de sphaigne ancrée au sol; l'unité de coupe exerçant par exemple une pression sur l'aire de cueillette inférieure à 40 kPa ou 35 kPa.

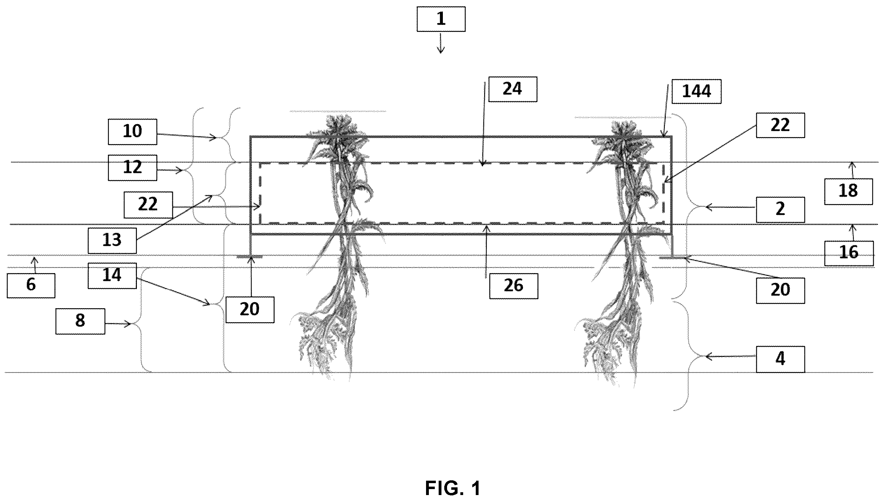

Le Tableau 1 énumère différents éléments d'un exemple illustré à la figure 1.

**Tableau 1:**

| **Numéro** | **Élément** | **Description** |
|---|---|---|
| 2 | Acrotelme | Couche d'un écosystème tourbeux qui se trouve constamment ou périodiquement dans des conditions aérobies, caractérisée par des fluctuations de la nappe phréatique et qui présente une décomposition rapide de la matière organique |
| 4 | Catotelme | Couche inférieure de tourbe qui se trouve en permanence sous la nappe phréatique. Sous ces conditions anaérobies, l'activité microbienne et les processus de décomposition de la tourbe sont plus lents que dans l'acrotelme. |
| 6 | Sol | Là où repose les assises de l'unité de coupe |
| 8 | Nappe phréatique | Réserve d'eau souterraine peu profonde. |
| 10 | Partie apicale | Portion supérieure de la partie aérienne de la plante, siège de la genèse de siège des nouveaux organes |
| 12 | Partie aérienne | Partie de la plante située au-dessus la coupe inférieure horizontale |
| 13 | Portion intermédiaire | Portion de l'acrotelme récoltée pour une coupe en deux plans |
| 14 | Partie inférieure | Partie de la plante située sous la coupe inférieure horizontale |
| 16 | Plan de coupe no 1 | Limite horizontale inférieure de la coupe de sphaigne vivante |
| 18 | Plan de coupe no 2 | Limite horizontale supérieure de la coupe de sphaigne vivante, sans apport de la partie apicale |
| 20 | Assises mobiles | Tige de soutènement qui répartit le poids du châssis de l'unité de récolte au sol |
| 22 | Coupe verticale | Taille réalisée de part et d'autre de la portion intermédiaire |
| 24 | Extrémité supérieure | Extrémité délimitée par le plan de coupe no1 |
| 26 | Extrémité inférieure | Extrémité délimitée par le plan de coupe no2 |

La figure 1 montre une représentation simplifiée de l'aire de cueillette (1), constituée de l'acrotelme (2), du catotelme (4) et d'une nappe phréatique (8) qui fluctue au gré des précipitations et de l'évapotranspiration. Le bâti de l'unité de coupe (144) y repose sur des tiges de soutènement qui servent d'assises mobiles (20) et répartissent le poids de la charge au sol (6). Selon le mode d'opération choisi, deux lames parallèles et distantes permettent une coupe horizontale aux extrémités inférieure (26) et supérieure (24) de la portion intermédiaire de la mousse de sphaigne vivante récoltée (13), ce qui correspond respectivement au plan de coupe no 1 (16) et au plan de coupe no 2 (18). L'intervention est complétée par une seconde taille (22); taille réalisée à la verticale de part et d'autre de la portion intermédiaire. Selon un autre mode d'opération, une seule coupe horizontale peut être réalisée à l'extrémité inférieure, ce qui correspond qu'au plan de coupe no 1. Dans pareille situation, la partie aérienne du plant de sphaigne (12) est prélevée, incluant la partie apicale (10), laissant ancrée au sol une partie inférieure du plant (14). Quel que soit le mode d'opération retenu, la mousse de sphaigne demeure vivante et fixée au sol i.e. elle n'est pas arrachée.

### Unité de coupe

Il est décrit, ici, une unité de coupe ainsi qu'un système de récolte comprenant une telle unité de coupe, ledit système étant utile pour le prélèvement de mousse de sphaigne. En fait, le système de récolte permet une coupe et un prélèvement d'une portion de ladite mousse; prélèvement réalisé dans la portion aérienne de la mousse de sphaigne, avec ou sans remise au sol de la partie apicale de la sphaigne ainsi récoltée.

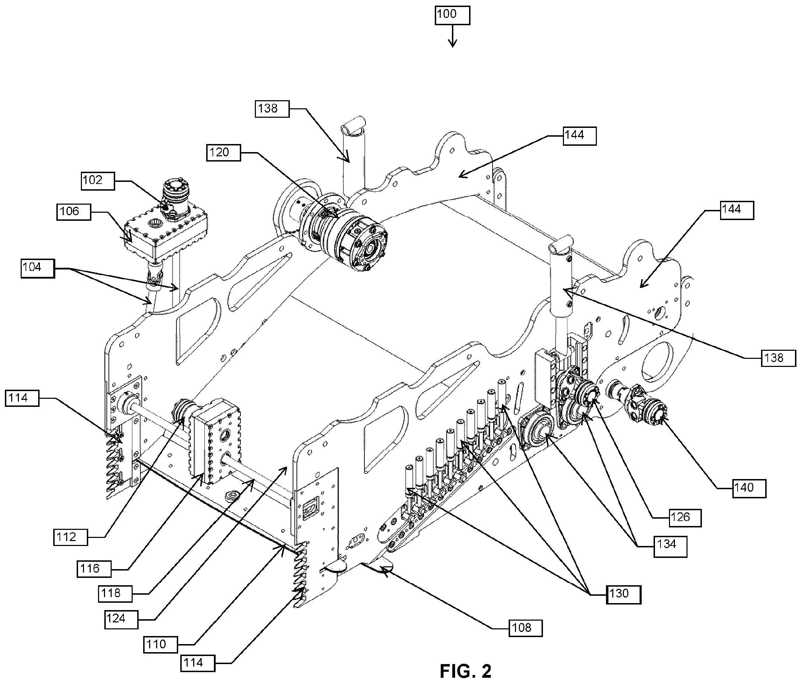

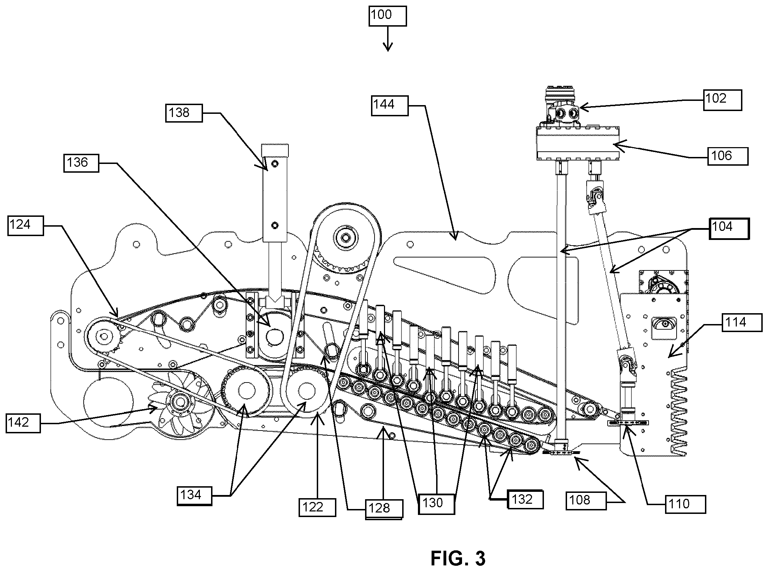

Le Tableau 1 énumère différents éléments d'un exemple illustré aux figures 2 et 3.

**Tableau 2:**

| **Numéro** | **Composante** | **Description** |
|---|---|---|
| 102 | Moteur (1) | Moteur destiné à actionner les scies à chaîne |
| 104 | Arbre de transmission (2) | Arbre de transmission qui transmet la force motrice du moteur à la scie à chaîne |
| 106 | Boîte de vitesse | Boîtes de vitesse qui régule la vitesse de rotation des scies à chaîne |
| 108 | Lame de scie à chaîne | Lame qui permet une coupe horizontale inférieure |
| 110 | Lame de scie à chaîne | Lame qui permet une coupe horizontale supérieure |
| 112 | Moteur (1) | Moteur destiné à actionner les deux cisailles |
| 114 | Cisailles (2) | Lames qui permet une coupe verticale |
| 116 | Boîte de vitesse | Boîtes de vitesse qui régule la vitesse de fonctionnement des cisailles |
| 118 | Arbre de transmission | Arbre de transmission qui transmet la force motrice du moteur aux deux cisailles |
| 120 | Moteur (1) | Moteur destiné à actionner le tapis pour le |
| | | transport du matériel récolté et la courroie inférieure d'essorage |
| 122 | Chaînes ou courroies d'entrainement (3) | Chaînes ou courroies d'entraiment qui transmettent la force motrice du moteur au tapis de transport |
| 124 | Tapis de transport (1) | Tapis pour le transport du matériel de réensemencement |
| 126 | Moteur (1) | Moteur destiné à actionner la courroie d'essorage supérieure |
| 128 | Courroies d'essorage (2) | Courroies perforées, destinées à laisser s'écouler l'excédent d'eau, issu de la pression exercée par les rouleaux d'essorage |
| 130 | Cylindres à gaz (10) | Cylindres à gaz qui permettent d'exercer une pression constante en pré-essorage |
| 132 | Rouleaux de pré-essorage (10) | Rouleaux destinés à extraire, par pression sur la matière végétale, un premier volume d'eau contenu dans la sphaigne récoltée |
| 134 | Rouleaux d'essorage (32) | Rouleaux d'essorage inférieurs destinés à extraire, par pression sur la matière végétale, un volume additionnel d'eau contenu dans la sphaigne récoltée |
| 136 | Rouleaux d'essorage (1) | Rouleau d'essorage supérieur destinés à extraire, par pression sur la matière végétale, un volume additionnel d'eau contenu dans la sphaigne récoltée |
| 138 | Cylindre hydraulique (2) | Cylindre hydraulique pour le contrôle de la |
| | | pression d'essorage générée par les rouleaux |
| 140 | Moteur (1) | Moteur destiné à actionner le système de foisonnement |
| 142 | Foisonneur (1) | Système qui permet de donner du volume à la matière récoltée |
| 144 | Châssis | Bâti de l'unité de récolte |
| 146 | Chute | Système qui permet de redéposer au sol la partie apicale de la sphaigne |

Comme illustré aux figures 2 et 3, l'unité de coupe (100), comprend un premier moteur hydraulique (102) dont la force motrice est transmise à l'aide d'arbres de transmission (104), dont la vitesse est régulée par le biais d'une boîte de vitesse (106). Ces arbres de transmission actionnent une lame de scie à chaîne (108) qui permet la coupe horizontale inférieure (26) (voir figure 1) et une lame de scie à chaîne (110) pour la coupe horizontale supérieure (24) (voir figure 1).

L'unité de coupe (100) comprend un second moteur hydraulique (112), destiné à actionner une paire de cisailles (114), posées de chaque côté de l'unité de coupe, ce pour permettre la coupe verticale (22) (voir figure 1) de la portion de sphaigne récoltée. La force motrice de ce moteur hydraulique (112) est transmise à l'aide d'un arbre de transmission (118), duquel la vitesse est régulée par le biais d'une boîte de vitesse (116).

L'unité de coupe (100) comprend un troisième moteur hydraulique (120), destiné à entraîner les courroies d'essorage inférieures en actionnant directement les rouleaux d'essorage inférieurs (134). Ce moteur hydraulique (120) communique également la force motrice nécessaire pour actionner le tapis roulant (124) servant au transport de la partie apicale de la sphaigne remise au sol, ce par l'entremise de chaînes ou de courroies de transmission (122) L'unité de coupe (100) comprend un quatrième moteur hydraulique (126) destiné à entraîner la courroie d'essorage supérieure. Ce moteur hydraulique (126) communique également, de façon directe, la force motrice nécessaire pour actionner le rouleau d'essorage supérieur (136). Les courroies supérieure et inférieure (128) sont toutes deux perforées, ceci afin de laisser s'écouler l'excédent d'eau issu de la pression exercée par les rouleaux d'essorage (134, 136) sur la mousse de sphaigne prélevée. Cette pression sur les rouleaux d'essorage se veut ajustable grâce à la force exercée sur ces derniers par les cylindres hydrauliques (138) positionnés de part et d'autre de l'unité de coupe. Concurremment, la mousse de sphaigne récoltée subit un pré-essorage. Pour y parvenir, une série de cylindres à gaz (130) exercent conjointement une pression constante sur le matériel récolté; ceci par l'intermédiaire des rouleaux de pré-essorage (132).

L'unité de coupe (100) comprend un cinquième moteur hydraulique (140), destiné à actionner le système de foisonnement (142) ; composante servant à délier la mousse de sphaigne pour en augmenter le volume. L'ensemble est monté sur un châssis (144) tel que décrit aux figures 2 et 3.

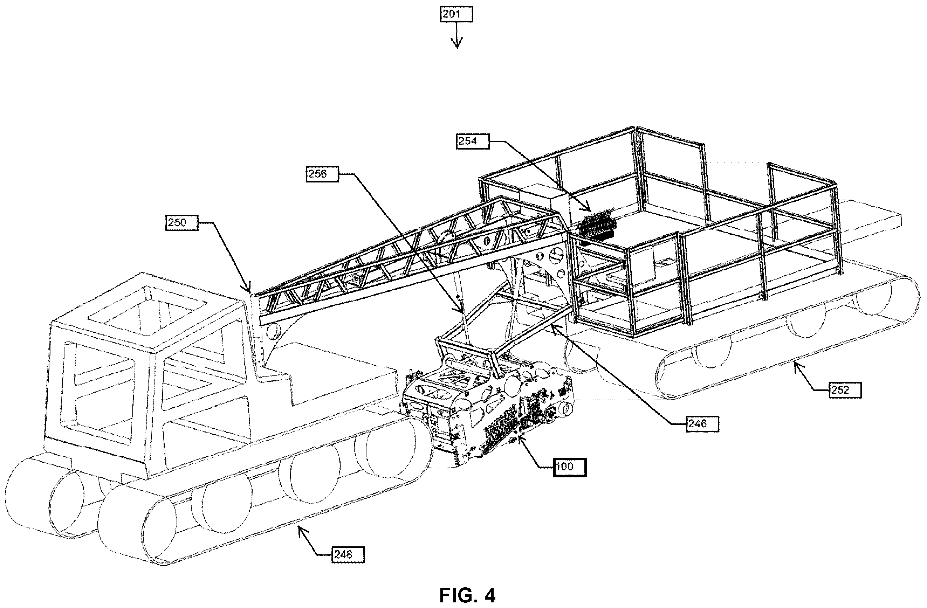

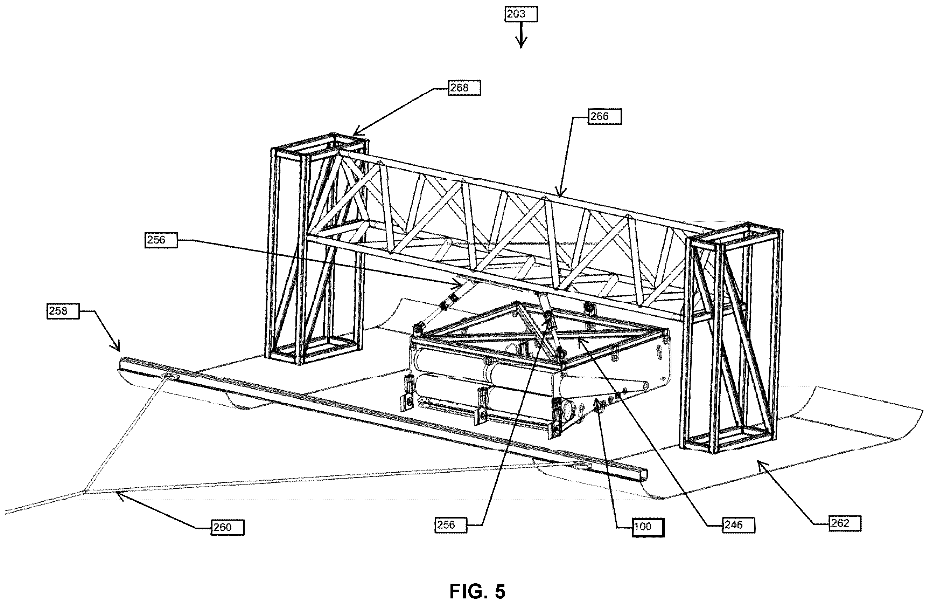

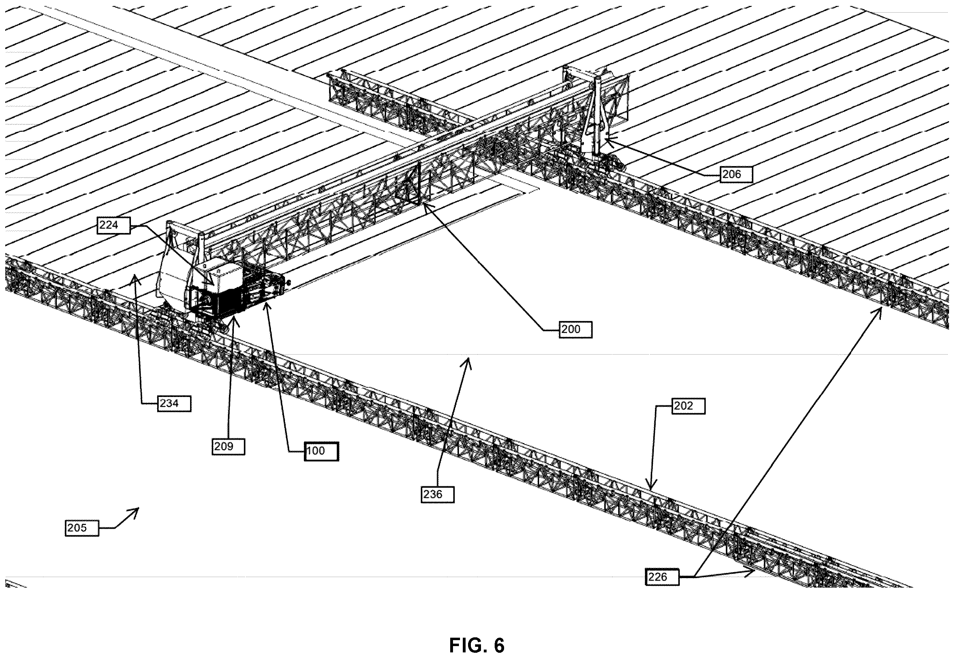

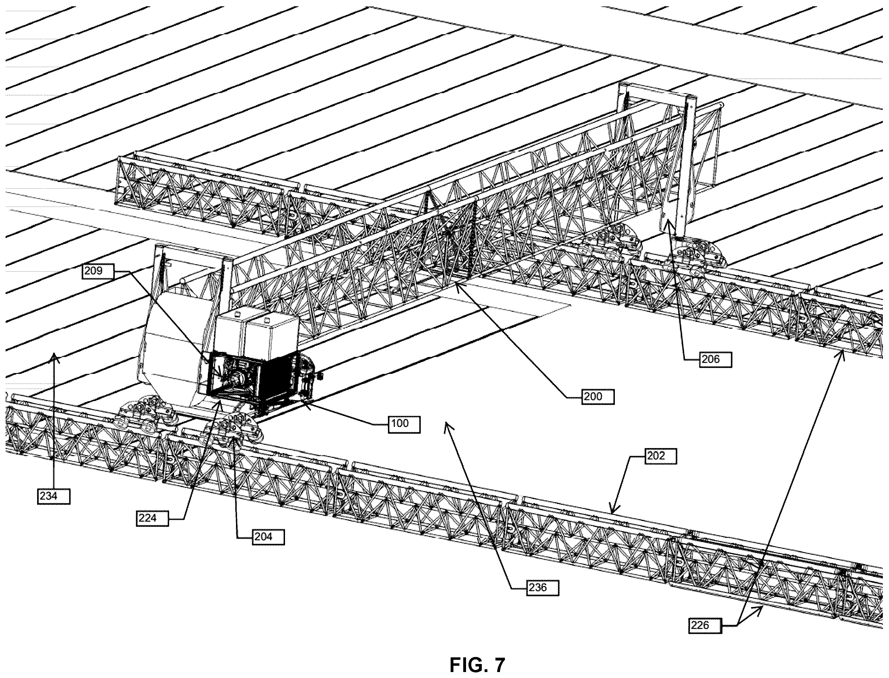

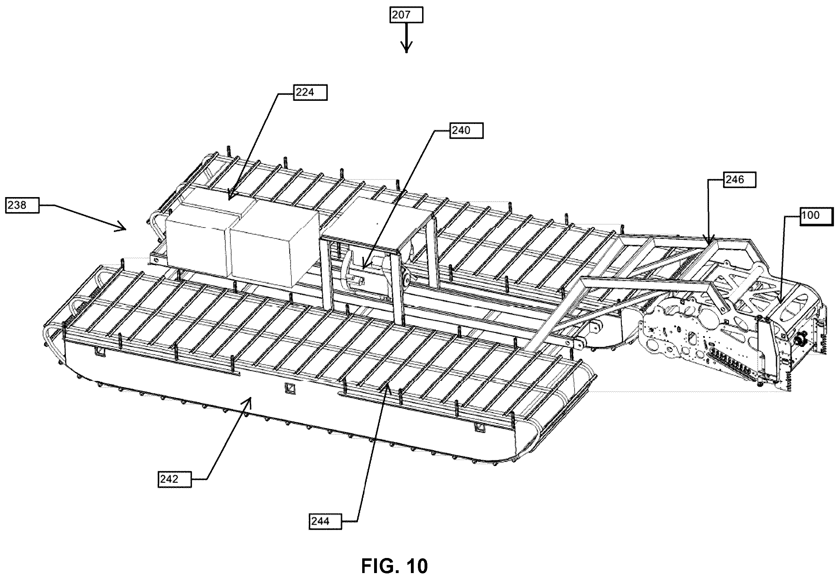

L'unité de coupe (100) peut être intégrée dans divers systèmes de récolte. Par exemple, l'unité de coupe (100) peut être incorporée au système de récolte (201) (figure 4); au système de récolte (203) (figure 5); au système de récolte (205) (figures 6 et 7); ou au système de récolte (207) (figure 10).

### Récolte

Le Tableau 3 énumère différents éléments d'exemples illustrés aux figures 4 à 10.

**Tableau 3:**

| **Numéro** | **Composante** | **Description** |
|---|---|---|
| 200 | Pont roulant, mobile | Structure sur laquelle se déplace l'unité de coupe, ce perpendiculairement aux rails |
| 201 | Système de récolte | Système de récolte, comprenant, l'unité de |
| | | coupe rattachée à une remorque |
| 202 | Rails | Barres métalliques parallèles sur lesquelles se déplacent pont roulant et unité de récolte |
| 203 | Système de récolte | Système de récolte, comprenant l'unité de coupe, montée sur un cadre métallique |
| 204 | Bogies | Chariot mobile permettant le déplacement sur rails |
| 205 | Système de récolte | Système de récolte, comprenant l'unité de coupe, arrimée à un pont roulant |
| 206 | Bâti | Charpente rigide servant de support au pont roulant |
| 207 | Système de récolte | Système de récolte, comprenant l'unité de coupe montée sur un cadre métallique mobile rattaché à un véhicule autopropulsé |
| 208 | Base portante | Assise sur laquelle repose l'ensemble des composantes mobiles |
| 210 | Structure tubulaire | Fixe les rails et le convoyeur à la base portante, tout en supportant la charge utile |
| 212 | Jonction | Pièce qui relie deux sections de rail |
| 214 | Convoyeur | Permet le transport du matériel récolté |
| 216 | Moteur | Présent à chacune des sections de rail, il alimente le tapis du convoyeur |
| 218 | Roue | Système de roulement, qui permet le déplacement d'une section de rail sur l'ensemble, ce pour fin d'installation. |
| 220 | Pivot | Charnière qui permet le déploiement d'une section de rail. |
| 222 | Moteur | Alimente en énergie le pivot |
| 224 | Système hydraulique | Alimente les moteurs de l'unité de récolte |
| 226 | Section mobile | Élément sectionnel regroupant rails, structure tubulaire, convoyeur et base portante |
| 228 | Chemin | Permet l'accès à l'aire de récolte |
| 230 | Camion | Pour transport hors de l'aire de récolte |
| 232 | Opérateur | Gère les opérations sur le terrain |
| 233 | Zone de récolte | Portion de terrain où la cueillette est effectuée |
| 234 | Aire récoltée | Portion de terrain où la cueillette a déjà été réalisée |
| 236 | Aire vierge | Portion de terrain non encore récoltée |
| 238 | Unité autopropulsée | Véhicule autonome, incorporant une unité de récolte |
| 240 | Moteur | Moteur permettant de mouvoir l'unité autopropulsée sur l'aire de récolte |
| 242 | Caisson | Permet d'améliorer la flottabilité de l'unité autopropulsée, en milieu humide |
| 244 | Chenilles | Dispositif de traction articulé, permettant de se déplacer sur tout type de terrain. |
| 246 | Cadre métallique | Supporte l'unité de récolte |
| 248 | Tracteur | Véhicule destiné à tirer une unité de récolte |
| 250 | Bras d'arrimage | Permet de rattacher une remorque au tracteur |
| 252 | Remorque | Plateforme tractée, siège de la station de contrôle, reliée à l'unité de récolte |
| 254 | Station de contrôle | Permet la gérance complète de l'unité de récolte |
| 256 | Vérins hydrauliques | Permet le contrôle de la hauteur de l'unité de récolte par rapport au sol |
| 258 | Remorque sur patins | Plateforme tractée, sur laquelle est montée l'unité de récolte |
| 260 | Câble | Relié au tracteur, permet de remorquer la remorque sur patins |
| 262 | Patins | Permet la glisse de la remorque à la surface de l'aire de récolte |
| 266 | Traverse aérée | Permet de soutenir l'unité de récolte |
| 268 | Montants aérées | Permettent le soutien de la traverse aérée |

Comme illustré aux figures 4, 5, 6, 7, 8, 9 et 10, l'unité de coupe (100) peut se déplacer sur l'aire de cueillette selon différents modes i.e. selon les différents systèmes de récolte utilisés.

La figure 4 présente le système de récolte (201) qui comprend l'unité de coupe (100) rattachée à une remorque (252), siège de la station de contrôle (254), par l'entremise d'un cadre métallique mobile (246); cadre relié à des vérins hydrauliques (256) ancrés au bras d'arrimage (250) pour en permettre le déplacement selon un axe vertical par rapport au sol. Ce bras d'arrimage est accroché à un tracteur (248) servant à tirer l'ensemble sur l'aire de récolte.

La figure 10 présente le système de récolte (207) qui comprend l'unité de coupe (100) montée sur un cadre métallique mobile (246), cadre rattaché à un véhicule autopropulsé (238) équipé de chenilles (244), dont un système hydraulique (224) en alimente le moteur (240). Ce véhicule possède des caissons de flottaison (242) pour en faciliter le déplacement en zone humide et parfois inondée.

La figure 5 présente le système de récolte (203) qui comprend l'unité de coupe (100) montée sur un cadre métallique (246) relié à des vérins hydrauliques (256) pour en permettre le déplacement selon un axe vertical par rapport au sol. Ces vérins sont fixés à une traverse métallique aérée (266); traverse soutenue à ses extrémités par deux montants métalliques aérés (268). Chacun de ces montants métalliques reposent sur patins (262) afin de répartir le poids de l'ensemble au sol et permettre la glisse à la surface de l'aire de récolte. Un câble (260) fixé aux patins à une extrémité et à un véhicule tracté de l'autre rend possible le déplacement de la remorque sur patins (258) sur l'aire de récolte.

Les figures 6, 7 présentent le système de récolte (205) et montrent une représentation simplifiée de l'unité de coupe (100) arrimée à un pont roulant (200), lui-même monté sur un bâti rigide (206) équipé de bogies (204). L'unité de coupe s'y meut à l'aide d'un système hydraulique (224) qui en alimente les moteurs (209). Ce déplacement se trouve perpendiculaire aux sections mobiles (226) situées de part et d'autre des extrémités du pont roulant. Ces sections munies de rails (202) permettent le déplacement de l'unité de coupe (100) et du pont roulant de l'aire récoltée (234) à l'aire dite vierge (236).

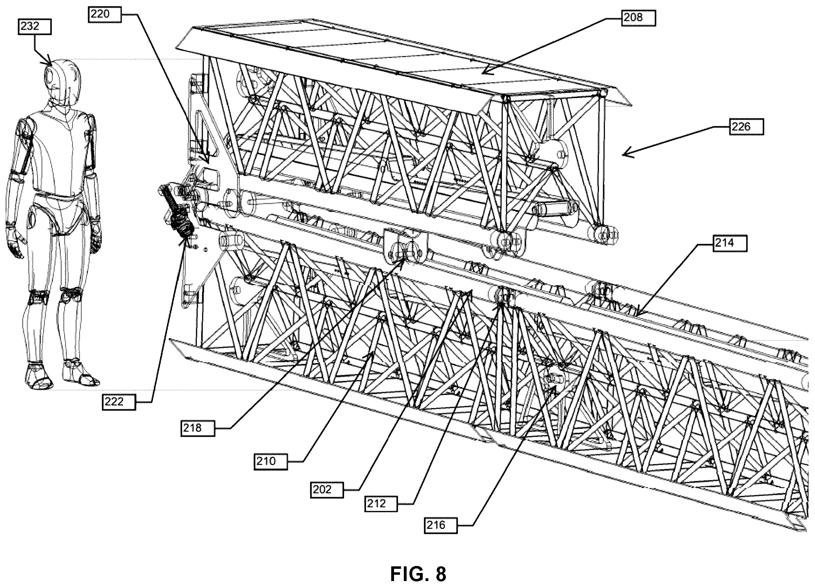

La figure 8 présente une vue détaillée d'une section mobile (226) et de ses constituants à l'échelle de l'opérateur (232). Une structure tubulaire (210) supporte le rail (202) et la charge qui est appelée à y reposer. Le poids est réparti grâce à une base portante (208) qui sert d'assise au sol. Chacune des sections est acheminée à son point d'ancrage à l'aide de roues (218) qui lui permettent de se déplacer sur les sections mobiles déjà installées en amont. En bout de course, elle s'arrime aux autres par l'entremise d'une jonction (212), une fois déplier à l'aide d'un pivot (220) actionné par un moteur (222). Chaque section mobile est munie d'un moteur (216) qui alimente le tapis du convoyeur (214) où la matière récoltée est transportée.

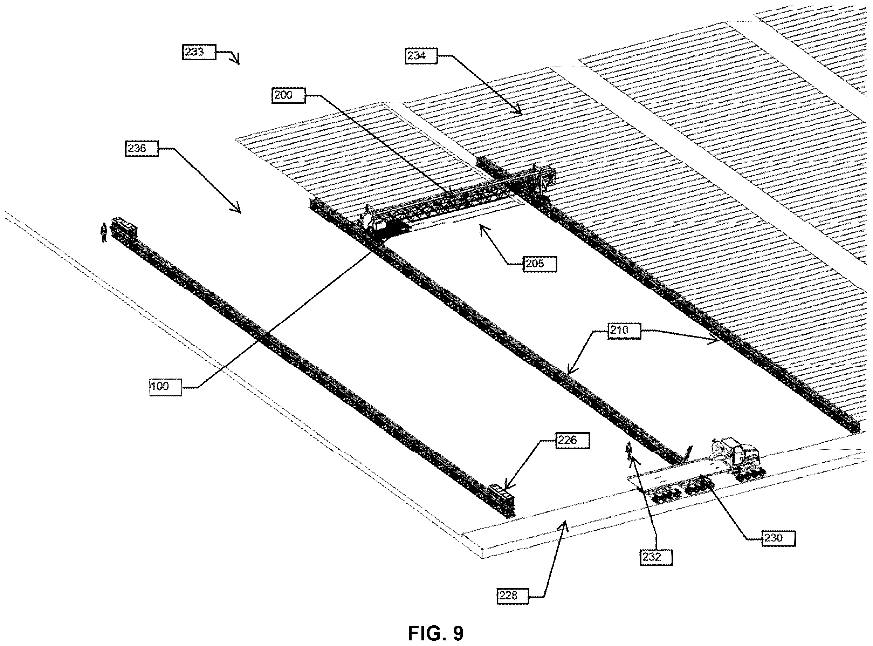

La figure 9 présente une vue aérienne de la zone de récolte (233). On y montre l'unité de coupe (100) arrimée au pont roulant (200) qui repose sur une structure tubulaire (210) constituée d'un agencement de sections mobiles et amovibles (226). Arrimés les unes, ces sections permettent un redéploiement du système de récolte (205) sur chacune des aires constituant la zone de récolte, de celles récoltées (234) à celles dites vierges (236). Les sections mobiles sont dotées de tapis convoyeur (voir figure 8) qui achemine la mousse de sphaigne vers une unité de transport terrestre (230). Sous la gérance d'un opérateur (232), la mousse de sphaigne y est transbordée, puis transportée hors de la zone de récolte par un chemin d'accès (228) prévu à cette fin.

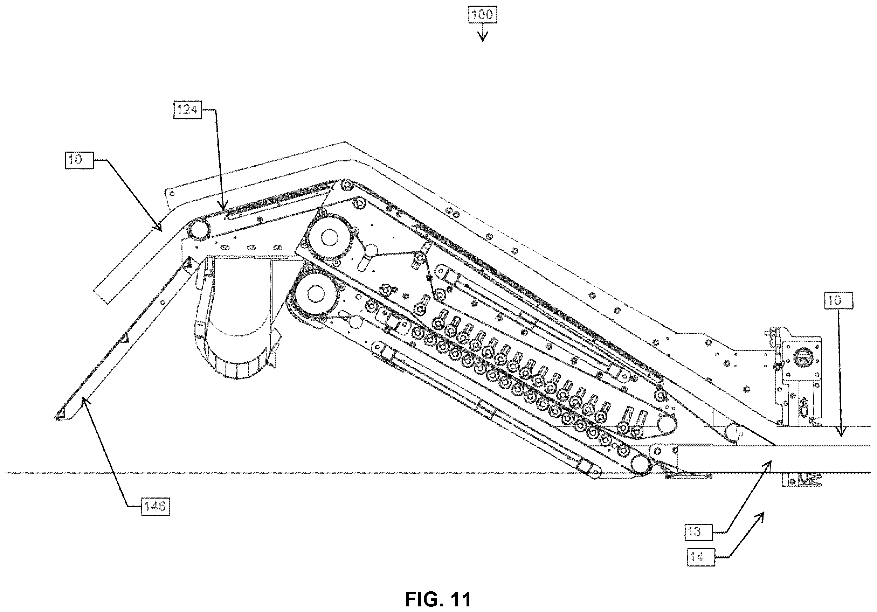

La figure 11 montre l'unité de coupe (100) qui récolte la portion intermédiaire (13) et laisse la partie inférieure de la plante au sol (14) sur lequel la partie apicale (10) est redéposée. L'opération s'effectue grâce à un tapis de transport (124) et d'une chute (146), le tout de manière à réensemencer l'aire de récolte et à en accélérer la reprise.

La description doit être interprétée comme une illustration de la présente technologie, mais ne doit pas être considérée comme limitant les revendications. Les revendications ne doivent pas être limitées dans leur portée par les exemples, mais doivent recevoir l'interprétation qui soit conforme aux revendications.

## Revendications

1. Méthode de prélèvement de mousse de sphaigne comprenant une coupe motorisée et un prélèvement d'au moins une portion de la mousse de sphaigne dans laquelle la coupe est effectuée au moins dans un sens substantiellement parallèle par rapport au sol tout en laissant la mousse de sphaigne ancrée au sol, dans laquelle la coupe s'effectue par sciage horizontal à un angle de coupe d'environ 0 à environ 10° par rapport au sol, dans laquelle la coupe est effectuée de façon à prélever une portion mesurant environ 2 cm à environ 40 cm, et dans laquelle la coupe est en outre effectuée dans un sens substantiellement vertical.

2. Méthode selon la revendication 1, dans laquelle la coupe est effectuée avec au moins une lame ou une scie.

3. Méthode selon la revendication 1, dans laquelle la coupe est effectuée avec au moins une scie à chaîne.

4. Méthode selon l'une quelconque des revendications 1 à 3, dans laquelle la coupe est effectuée par sciage horizontal à un angle de coupe d'environ 0 à environ 5° par rapport au sol.

5. Méthode selon l'une quelconque des revendications 1 à 4, dans laquelle la coupe est effectuée de façon à prélever une portion mesurant environ 3 cm à environ 30 cm.

6. Méthode selon l'une quelconque des revendications 1 à 4, dans laquelle la coupe est effectuée de façon à prélever une portion mesurant environ 5 cm à environ 20 cm.

7. Méthode selon l'une quelconque des revendications 1 à 4, dans laquelle la coupe est effectuée de façon à prélever une portion mesurant d'environ 8 cm à environ 12 cm.

8. Méthode selon l'une quelconque des revendications 1 à 7, dans laquelle la coupe verticale est effectuée avec un angle de plus ou moins 20 ° par rapport à un axe vertical.

9. Méthode selon l'une quelconque des revendications 1 à 7, dans laquelle la coupe verticale est effectuée à deux endroits avec indépendamment un angle de plus ou moins 20 ° par rapport à un axe vertical à chacun des endroits.

10. Méthode selon l'une quelconque des revendications 1 à 7, dans laquelle la coupe verticale est effectuée à deux endroits avec indépendamment un angle de plus ou moins 10° par rapport à un axe vertical à chacun des endroits.

11. Méthode selon l'une quelconque des revendications 9 à 10, dans laquelle la coupe verticale est effectuée avec une distance d'environ 40 à environ 400 cm entre les deux endroits.

12. Méthode selon l'une quelconque des revendications 9 à 10, dans laquelle la coupe verticale est effectuée avec une distance d'environ 50 à environ 150 cm entre les deux endroits.

13. Méthode selon l'une quelconque des revendications 1 à 12, comprenant une vitesse moyenne de cueillette est d'environ de 0.2 à environ 1.2 km/heure.

14. Méthode selon l'une quelconque des revendications 1 à 13, comprenant un volume de cueillette d'environ 250 à environ 1500 m³/hectare.

## Patentansprüche

1. Verfahren zur Entnahme von Torfmoos, umfassend einen motorisierten Schnitt und die Entnahme mindestens eines Abschnitts des Torfmooses, wobei der Schnitt mindestens in einer Richtung erfolgt, die im Wesentlichen parallel zum Boden verläuft, während das Torfmoos im Boden verankert bleibt, wobei der Schnitt durch horizontales Sägen in einem Schnittwinkel von etwa 0 bis etwa 10° zum Boden erfolgt, wobei der Schnitt so ausgeführt wird, dass ein Abschnitt von etwa 2 cm bis etwa 40 cm entnommen wird, und wobei der Schnitt ferner in einer im Wesentlichen vertikalen Richtung erfolgt.

2. Verfahren nach Anspruch 1, wobei der Schnitt mit mindestens einer Klinge oder einer Säge durchgeführt wird.

3. Verfahren nach Anspruch 1, wobei der Schnitt mit mindestens einer Kettensäge durchgeführt wird.

4. Verfahren nach einem der Ansprüche 1 bis 3, bei dem der Schnitt durch horizontales Sägen in einem Schnittwinkel von etwa 0 bis etwa 5° zum Boden ausgeführt wird.

5. Verfahren nach einem der Ansprüche 1 bis 4, bei dem der Schnitt so ausgeführt wird, dass ein Abschnitt von etwa 3 cm bis etwa 30 cm entnommen wird.

6. Verfahren nach einem der Ansprüche 1 bis 4, bei dem der Schnitt so ausgeführt wird, dass ein Abschnitt von etwa 5 cm bis etwa 20 cm entnommen wird.

7. Verfahren nach einem der Ansprüche 1 bis 4, bei dem der Schnitt so ausgeführt wird, dass ein Abschnitt von etwa 8 cm bis etwa 12 cm entnommen wird.

8. Verfahren nach einem der Ansprüche 1 bis 7, bei dem der vertikale Schnitt in einem Winkel von plus oder minus 20° zu einer vertikalen Achse ausgeführt wird.

9. Verfahren nach einem der Ansprüche 1 bis 7, bei dem der vertikale Schnitt an zwei Stellen jeweils unabhängig voneinander in einem Winkel von plus oder minus 20° zu einer vertikalen Achse an jeder der Stellen durchgeführt wird.

10. Verfahren nach einem der Ansprüche 1 bis 7, bei dem der vertikale Schnitt an zwei Stellen jeweils unabhängig voneinander in einem Winkel von plus oder minus 10° zu einer vertikalen Achse an jeder der Stellen durchgeführt wird.

11. Verfahren nach einem der Ansprüche 9 bis 10, bei dem der vertikale Schnitt an zwei Stellen mit einem Abstand von etwa 40 bis etwa 400 cm zwischen den beiden Stellen durchgeführt wird.

12. Verfahren nach einem der Ansprüche 9 bis 10, bei dem der vertikale Schnitt an zwei Stellen mit einem Abstand von etwa 50 bis etwa 150 cm zwischen den beiden Stellen durchgeführt wird.

13. Verfahren nach einem der Ansprüche 1 bis 12, bei dem die durchschnittliche Erntegeschwindigkeit etwa 0,2 bis etwa 1,2 km/h beträgt.

14. Verfahren nach einem der Ansprüche 1 bis 13, bei dem das Erntevolumen etwa 250 bis etwa 1500 m³/Hektar beträgt.

## Claims

1. A method for collecting sphagnum moss comprising a motor-driven cut and a collection of at least one portion of the sphagnum moss, wherein the cut is performed at least in a direction substantially parallel to the ground while leaving the sphagnum moss anchored to the ground, wherein the cut is performed by horizontal sawing at a cutting angle of about 0° to about 10° with respect to the ground, wherein the cut is performed so as to collect a portion measuring about 2 cm to about 40 cm, and wherein the cut is further performed in a substantially vertical direction.

2. The method according to 1, wherein the cut is performed with at least one blade or one saw.

3. The method according to 1, wherein the cut is performed with at least one chainsaw.

4. The method according to any one of claims 1 to 3, wherein the cut is performed by horizontal sawing at a cutting angle of about 0° to about 5° with respect to the ground.

5. The method according to any one of claims 1 to 4, wherein the cut is performed so as to collect a portion measuring about 3 cm to about 30 cm.

6. The method according to any one of claims 1 to 4, wherein the cut is performed so as to collect a portion measuring about 5 cm to about 20 cm.

7. The method according to any one of claims 1 to 4, wherein the cut is performed so as to collect a portion measuring about 8 cm to about 12 cm.

8. The method according to any one of claims 1 to 7, wherein the vertical cut is performed with an angle of more or less 20° with respect to a vertical axis.

9. The method according to any one of claims 1 to 7, wherein the vertical cut is performed at two locations independently with an angle of more or less 20° with respect to a vertical axis at each of the locations.

10. The method according to any one of claims 1 to 7, wherein the vertical cut is performed at two locations independently with an angle of more or less 10° with respect to a vertical axis at each of the locations.

11. The method according to any one of claims 9 to 10, wherein the vertical cut is performed with a distance of about 40 to about 400 cm between the two locations.

12. The method according to any one of claims 9 to 10, wherein the vertical cut is performed with a distance of about 50 to about 150 cm between the two locations.

13. The method according to any one of claims 1 to 12, comprising an average harvest speed of about 0.2 to about 1.2 km/hour.

14. The method according to any one of claims 1 to 13, comprising a harvest volume of about 250 to about 1,500 m³/hectare.
